# EUROPÄISCHE PATENTSCHRIFT

(11) **EP 0 733 883 B1**
(45) Veröffentlichungstag und Bekanntmachung des Hinweises auf die Patenterteilung: **23.05.2001**
(21) Anmeldenummer: 96102055.9
(22) Anmeldetag: 13.02.1996
(51) Int. Cl.: G01D 11/24, G01D 21/02

(54) **Sensormodul**
Sensor module
Unité de capteur

(30) Priorität: 24.03.1995 DE 19510416
(43) Veröffentlichungstag der Anmeldung: 25.09.1996
(73) Patentinhaber: KSB Aktiengesellschaft, 67227 Frankenthal (DE)
(72) Erfinder: Berge, Gerhard, D-64319 Pfungstadt (DE); Mewes, Frank, D-67547 Worms (DE)

(56) Entgegenhaltungen:
- EP-A- 0 254 142
- EP-A- 0 340 418
- DE-A- 3 915 682
- DE-U- 9 214 646
- DE-U- 9 309 152
- US-A- 4 972 099

## Beschreibung

Die Erfindung betrifft eine Einrichtung zur Meßwertübertragung, wobei Sensoren die Betriebszustände einer Maschine als Meßwerte erfassen und mit einer Auswerteeinheit verbunden sind.

Bei Pumpenaggregaten, Ventilen oder Motoren, die an schwer zugänglichen Stellen installiert sind, ist die Überwachung der Maschine sehr aufwendig und kostenintensiv. Beispielsweise trifft dies zu für Unterwassermotorpumpen, die in Brunnen eingebaut sind sowie in Kläranlagen Verwendung findende Tauchmotorpumpen, bei Armaturen in Reaktoranlagen und Fernleitungssystemen oder bei anderen entsprechenden Einbausituationen. Wenn im Wege einer vorbeugenden Instandsetzung die Maschinen mit Sensoren zur Überwachung von Temperaturen, Drücken, Geschwindigkeiten, Feuchtigkeit und dgl. ausgestattet sind, so bedeutet dies einen erheblichen Aufwand bei der Meßwerterfassung. Die dazu erforderlichen unterschiedlichen Sensoren müssen jeweils an den entsprechenden Stellen einer Maschine eingebaut werden, einzeln verdrahtet und an die unterschiedlichsten Auswertegeräte für die jeweiligen Sensoren außerhalb einer Maschine angeschlossen werden. Für eine unter Wasser befindliche Maschine bedeutet dies zusätzliche Gehäuseöffnungen zur Durchführung der notwendigen Kommunikationskabel. In so einem Fall stellt jede weitere abzudichtende Gehäuseöffnung einen zusätzlichen Aufwand bzw. ein unnötiges Risiko dar. Allenfalls in Ausnahmefällen kann mit außerhalb einer Maschine angeordneten Sensoren eine Minimalüberwachung vorgenommen werden. Wenn es aber um spezielle Meßwerte geht, die für die Lebensdauer einer Maschine von Bedeutung sind, wie z. B. eine Motor- oder Lagertemperatur, dann ist die Verwendung von internen Sensoren unumgänglich.

Durch die US-A 4 972 099 ist eine höchsttransportable Sensorkarte bekannt, in die Druck- oder Temperatursensoren integriert sind sowie eine Auswerteeinheit, mit deren Hilfe die Meßsignale der Sensoren erfaßt, umgewandelt und gespeichert werden. Die hohe Transportfähigkeit dieser Sensorkarte ermöglicht ihre Beifügung zur Lieferung von zu transportierenden Waren. Somit kann in einfacher Weise registriert werden, ob während eines Transportes die für manche Waren notwendigen Transportbedingungen, z. B. tiefgekühlte Lebensmittel oder dergleichen, eingehalten werden. Am Empfangsort einer solchen Ware kann die Sensorkarte der Lieferung entnommen und durch Einführung in einen Kartenleser eines Computers ausgewertet werden. Auch kann sie in einem Reaktionsgefäß abgelegt werden, um während eines chemischen Prozesses die Prozeßbedingungen aufzuzeichnen. Diesbezüglich hat die Karte also nur eine ausschließliche Registrierfunktion.

Durch die DE-U 92 14 646 ist eine Vorrichtung zur Meßwerterfassung mit einem Elektronikgehäuse bekannt, welches über einen besonderen Anschlußadapter verfügt, über den beliebige externe Meßeinrichtungen geschlossen werden können.

Die EP-A 0 254 142 beschreibt einen Transducer zur Messung physikalischer Größen und elektrischer Variablen. Er kann mit verschiedenen Sensoren verbunden werden und wird von einer Gleichspannungsquelle versorgt.

Das DE-U 93 09 152 betrifft einen Füllstandsgeber für eine Grenzwerterfassung von elektrisch oder kapazitiv leitfähigen Flüssigkeiten, wobei ein Kondensator als Erfassungsmittel dient, und der als Sensor innerhalb eines Schutzrohres angeordnet ist. Für das Schutzrohr des Sensors werden verschiedene Lösungsformen beschrieben.

Ebenfalls einen Sensor beschreibt der Gegenstand der DE-A 39 15 682, der mit pneumatischen Arbeitsmitteln zusammenwirkt. Die Besonderheit besteht hierin, daß räumlich abgekapselte elektronische Elemente an einem beweglichen Kolben innerhalb eines abgeschlossenen Pneumatikzylinders angebracht sind. Mit Hilfe dieser elektronischen Elemente können die innerhalb des Pneumatikzylinders vorherrschenden Zustandsgrößen erfaßt, berührungslos per Induktionsprinzip aus dem Pneumatikzylinder heraus an die Außenwand übertragen und dort berührungslos abgefragt werden.

Und die EP-A 0 340 418 beschreibt ebenfalls einen, durch eine Schutzeinrichtung geschützten Sensor in Form eines Impulsgebers. Dieser Impulsgeber ist in einem elektrischen Schienenfahrzeug eingebaut, wobei das Problem darin besteht, ihn vor den dort vorherrschenden starken Störeinflüssen zu schützen.

Der Erfindung liegt das Problem zugrunde, den Aufwand bei einer Meßwerterfassung und der Auswertung zu verringern. Die Lösung dieses Problems erfolgt durch eine mit den Merkmalen des Anspruches 1 beschriebene Einrichtung zur Meßwertübertragung. Deren Sensormodul stellt eine elektronische Einheit dar, die direkt in Maschinen, wie beispielsweise Pumpenaggregate, Armaturen, Motoren o.ä. installiert werden kann. Durch die Anordnung des Sensormoduls innerhalb eines abschirmenden Gehäuses ist dessen direkte Integration in einen elektrischen Antriebsmotor möglich, beispielsweise im Bereich des Wickelkopfes. Die Abschirmung verhindert in zuverlässiger Weise, daß die Elektronik des Sensormoduls durch die Magnetfelder eines Stators in Mitleidenschaft gezogen werden. Innerhalb einer Maschine befindliche Sensoren werden direkt an das Sensormodul angeschlossen, welches infolge seiner druckfesten und flüssigkeitsdichten Unterbringung innerhalb eines eigenen Gehäuses auch in wassergefüllten Antriebsmotoren verwendbar ist. Das Sensormodul steuert aufgrund seines internen Aufbaues die Erfassung der von den Sensoren gelieferten Meßwerte und wandelt sie in ein einheitliches Datenformat um. Durch ein in das Sensormodul integriertes Bussystem werden diese umgewandelten Daten an ein außerhalb der Maschine befindliches Überwachungsgerät übertragen. Damit wirkt das Sensormodul als ein in in eine Maschine integrierter Datenkonzentrator, der mit Hilfe einer Busanschaltung eine einfache Kommunikation mit einer externen Auswerteeinheit ermöglicht.

Die Möglichkeit der Koppelung von mehreren Sensormodulen miteinander, schafft in einfachster Weise die Voraussetzung zur problemlosen Erweiterung einer Überwachungseinrichtung. Es hängt vom internen Aufbau eines Sensormoduls ab, wieviele Anschlüsse vorgesehen sind. Ein praktisch erprobtes Modell war mit Anschlüssen für 10 Sensoren ausgestattet und verfügte auch über Ausgänge für eine Spannungsversorgung. Zum einen können mit dem Spannungsausgang Sensoren versorgt werden, die so etwas benötigen. Zum anderen könnte mit einer durchgeschleiften Spannung ein angekoppeltes Sensormodul versorgt werden. Genausogut kann die Versorgungsspannung für weitere Sensormodule auch am Eingang eines ersten Sensormodules abgenommen werden. Für einen praktischen Versuch war ein Sensormodul so ausgelegt, daß es mit insgesamt drei weiteren Sensormodulen koppelbar war, wodurch der Anschluß von bis zu 40 Sensoren möglich wurde. Der Vorteil dieser Lösung bestand darin, daß durch einen gemeinsamen Anschluß die Sensormodule mit einer außerhalb der Maschine befindlichen Auswerteeinheit verbunden waren. Die Anschlußleitung war vieradrig ausgebildet, wobei zwei Adern der Spannungsversorgung dienten und zwei Adern für die Kommunikation über einen Busanschluß sorgten. Zusammengekoppelte Sensormodule wurden durch einfache Verbindungsmöglichkeiten intern miteinander verbunden.

Ausgestaltungen der Erfindung sehen vor, daß das Sensormodul mit einer Einheit zur Erzeugung einer stabilen Gleichspannung versehen ist oder daß das Sensormodul mit einer Einheit zur Energieversorgung aus dem Versorgungsstromkreis einer Maschine versehen ist. Somit kann in einfachster Weise eine ungeregelte Gleichspannung, beispielsweise in der Größenordnung von 12 - 24 V, in das Sensormodul eingespeist werden. Aufgrund einer innerhalb des Sensormodules erzeugten stabilen Gleichspannung sowie der eingespeisten Spannung können die unterschiedlichsten Sensorbauarten mit dem Sensormodul betrieben werden.

Weitere Ausgestaltungen der Erfindung sehen vor, daß ein Sensormodul einzelne Module zur Erfassung, Vereinheitlichung und Übertragung der von verschiedenen Sensorbauarten gelieferten Meßwerte aufweist. Auch kann das Sensormodul durch eine ein- oder zweiadrige Busanschaltung mit einer externen Auswerteeinheit verbunden werden. Bei einer einadrigen Busanschaltung könnte ein Lichtleiterkabel Verwendung finden, wobei dies jedoch einen geringfügig höheren Aufwand innerhalb des Sensormodules zur Datenübertragung erfordert. Einfacher zu realisieren sind zweiadrige Drahtleitungen für ein Bussystem zur Datentübertragung.

Eine andere Ausgestaltung der Erfindung sieht vor, daß die Datenübertragung zwischen Sensormodul und Auswerteeinheit mit Hilfe der Verbindungsleitungen der Spannungsversorgung erfolgt. Diese Maßnahme minimiert für ein leitungsgebundenes Datenübertragungssystem den Aufwand an Übertragungsleitungen. Für Anwendungsfälle, bei denen Meßwerte nur beim Betrieb einer Maschine erforderlich sind, kann die Spannungsversorgung und die Datenübertragung über die Versorgungsleitungen der Maschine erfolgen. Dies verringert den Leitungsaufwand noch mehr. In einem derartigen Fall würde durch zusätzliche Module innerhalb des Sensormoduls die Datenübertragung mit Hilfe der Spannungsversorgungskabel erfolgen. Dazu können die standardisierten Daten in das Kabel eingespeist werden und im Bereich der Auswerteeinheit wieder entnommen werden. Für eine drahtlose Datenübertragung wäre das Sensormodul mit einem entsprechenden Modem zu verbinden.

Weitere Ausgestaltungen der Erfindung sehen vor, innerhalb des Sensormoduls einen programmierbaren Mikrocontroller anzuordnen, der die Verarbeitung von Meßwerten, Testfunktionen und die Kommunikation innerhalb und außerhalb des Moduls steuert. Weiterhin ist das Sensormodul mit einer Einrichtung zur Erzeugung von Betriebs- und/oder Referenzspannungen für die interne Elektronik und die anschließbaren Sensoren versehen. Zur Abschirmung eines oder mehrerer Sensormodule kann in einfachster Weise ein Stahlrohr Verwendung finden. Bei Versuchen hat sich gezeigt, daß bei Verwendung eines Stahlrohres, welches länger als ein Sensormodul ausgebildet ist und mit seinen offenen Enden über die Enden des Sensormoduls hinausragt, bei entsprechender Anordnung eine zuverlässige Abschirmung gegen Magnetfelder im Bereich der Wickelköpfe von elektrischen Antriebsmotoren liefert. Auf aufwendige Maßnahmen zu einer kompletten metallischen Umhüllung des Sensormoduls für Abschirmzwecke kann demzufolge verzichtet werden. Der Schutz des Sensormoduls gegen Feuchtigkeit, Druck und Vibrationen kann durch bekannte Verguß- und Isoliertechniken erreicht werden.

Ein Ausführungsbeispiel der Erfindung ist in den Zeichnungen dargestellt und wird im folgenden näher erläutert. Es zeigt die
- Fig. 1: ein Sensormodul im Größenvergleich zu einer Münze, die
- Fig. 2: das Sensormodul als Blockschaltbild und die
- Fig. 3 und 4: schematische Darstellungen der Anordnung eines Sensormoduls innerhalb einer Maschine.

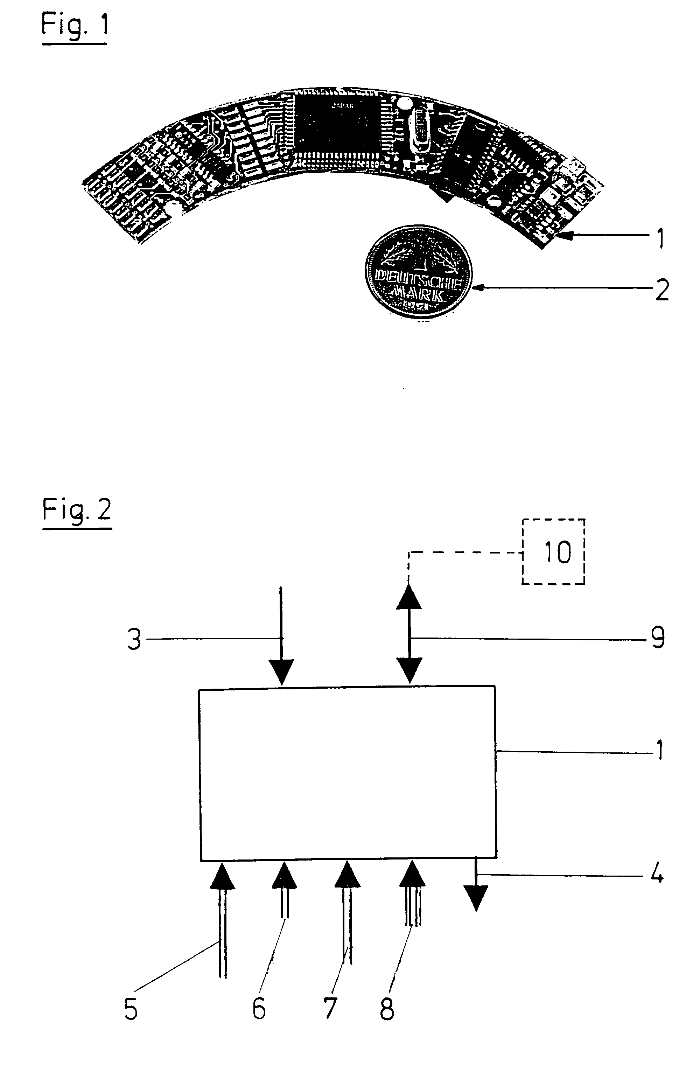

In der Fig. 1 ist als fotografische Abbildung ein Sensormodul 1 in einer Draufsicht gezeigt. Einem Größenvergleich dient die daneben befindliche Münze 2, welche einen Eindruck von der hohen Integrationsdichte vermittelt. Das Sensormodul 1 liegt hierbei in Form einer gebogenen Platine vor. Diese Form wurde gewählt, weil das Sensormodul zum Einsatz in einem Elektromotor ausgelegt wurde. Durch die Krümmung konnte somit eine direkte Anordnung im Bereich der Wickelköpfe eines elektrischen Antriebsmotors ermöglicht werden. Die hier gewählte Ausführungsform weist an dem linken Ende die Anschlüsse für die Sensoren auf und am rechten Ende die Anschlüsse für die Energieeinspeisung und den Datenanschluß. Das Sensormodul 1 kann auch jeden anderen geeigneten Aufbau aufweisen, der die Integration in eine Maschine erleichtet. Zu diesem Zweck kann das Sensormodul auch so aufgebaut werden, daß alle elektronischen Bauteile auf einem Keramiksubstrat angeordnet sind und damit eine platzraubende Platine entbehrlich wird. Somit kann das Sensormodul in Form einer Datenerfassung- und aufbereitungseinheit für Sensorsignale als ein kleines Bauelement bzw. Baustein in eine Maschine beliebig eingebaut werden.

In der Fig. 2 ist ein Sensormodul 1 als Blockschaltbild mit seinen Anschlußmöglichkeiten gezeigt. Der Anschluß 3 symbolisiert hier eine Spannungsversorgung für das Sensormodul 1. Als sehr geeignet hat sich eine Gleichspannungsversorgung erwiesen, die ungeregelt und im Bereich zwischen 12 und 24 V dem Sensormodul 1 zugeführt wird. Innerhalb des Sensormoduls ist dann eine Einheit oder auch ein Modul befindlich, welches für die Funktion eine stabile Gleichspannung erzeugt. Diese stabile Gleichspannung kann über einen Ausgang 4 einem Sensor zugeführt werden. Über den Ausgang 4 kann auch eine ungeregelte Spannungsversorgung ausgespeist werden, welche dann zur Energieversorgung eines - hier nicht dargestellten - zweiten oder weiteren ankoppelbaren Sensormodules dient. Die unterschiedlich langen Pfeile 5 bis 8 entsprechen den Eingängen von in ihrer Bauart unterschiedlichen Sensoren. Der doppelte Schaft der Pfeile symbolisiert hier die Möglichkeit, zwei Sensoren anzuschließen. So könnten beispielsweise an den Eingang 5 zwei Sensoren der Bauart PT100 angeschlossen werden, an den Eingang 6 wären beispielsweise sog. PTC-Sensoren für die Überwachung einer Wicklungstemperatur oder eines Füllstandes anschließbar. Der Eingang 7 kann für den Anschluß von Normsignalen im Bereich von 0 bis 5 V Gleichspannung Verwendung finden. Der Eingang 8 würde vier digitale Anschlüsse von entsprechenden Sensoren zulassen. Der Doppelpfeil 9 entspricht hierbei einem Busanschluß, der zur Kommunikation mit einer Auswerteeinheit 10 dient. Die strichpunktierte Darstellung der Einheit 10 symbolisiert deren Anordnung an einem externen Ort.

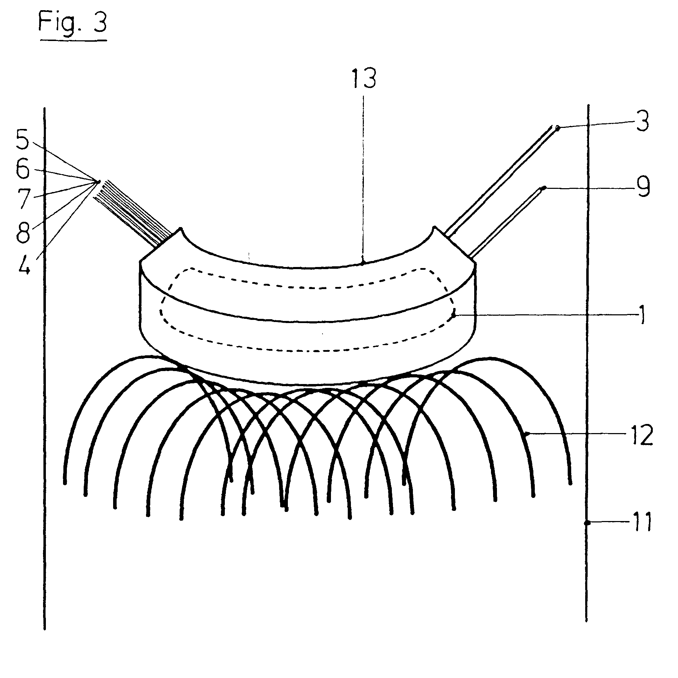

Die Fig. 3 zeigt in schematischer Darstellung die Anordnung des Sensormoduls 1 innerhalb eines Elektromotors 11. Von dem Elektromotor 11 ist der Wickelkopf 12 dargestellt, oberhalb dessen ein betriebsbereites Sensormodul befindlich ist. Dieses besteht aus dem Sensormodul 1 in Form seiner elektronischen Baueinheit, einem äußeren Gehäuse 13, welches für die abschirmende, druckdichte und flüssigkeitsdichte Ausbildung des Sensormoduls sorgt. Die Anschlüsse 3 und 9 sowie 5 bis 8 sind identisch mit den Anschlüssen des im Blockschaltbild der Fig. 2 gezeigten Sensormoduls 1. Die Isolation innerhalb des Gehäuses 13 und die druckdichte Ausbildung kann mit Hilfe üblicher Isolier- und Vergußtechniken erfolgen. Aus Gründen der Übersichtlichkeit wurden diese Teile nicht dargestellt.

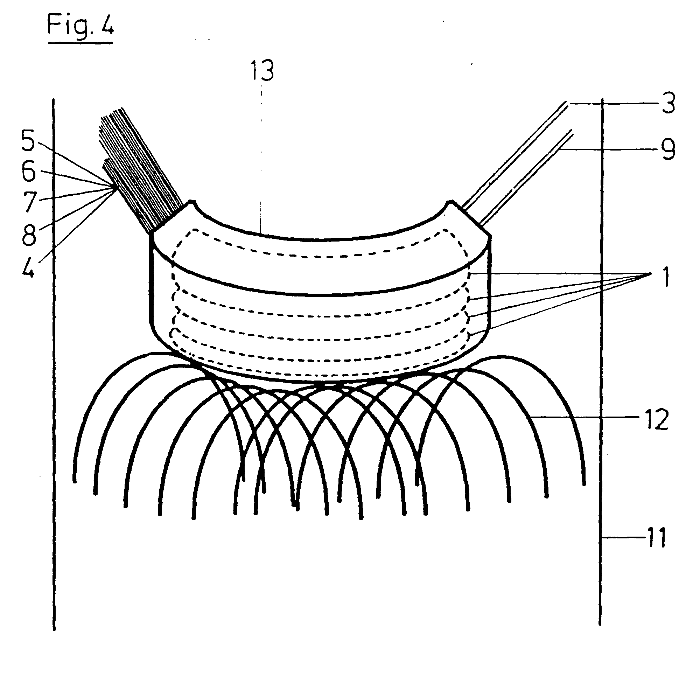

Die Fig. 4 entspricht ihrem Aufbau nach der Fig. 3 mit dem Unterschied, daß im Gehäuse 13 insgesamt vier Elektroniken der Sensormodule 1 angeordnet sind. Dies vergrößert die Anschlußmöglichkeit von Sensoren, die zur Überwachung einer Maschine notwendig sind. Für die externe Kommunikation stellt dies eine gravierende Vereinfachung dar, da nur die Anschlüsse 3 und 9 aus dem Elektromotor 11 herausgeführt werden müssen. Die Verbindung zwischen den elektronischen Baueinheiten der Sensormodule 1, die hier in verschiedenen Höhenebenen angeordnet sind, erfolgt innerhalb des Gehäuses 13.

Ein weiterer Vorteil dieses in eine Maschine integrierbaren Sensormoduls besteht darin, daß es auch unter Bedingungen betrieben werden kann, die dem Explosionsschutz unterliegen. Die Anordnung von mehreren Sensormodulen innerhalb eines einzigen Gehäuses ist nicht notwendig. Beispielsweise sind Überwachungsfälle vorstellbar, bei denen die Sensoren innerhalb einer Maschine an räumlich weit auseinanderliegenden Stellen anzuordnen sind. Für solche Fälle ist es vorteilhafter, die Sensormodule jeweils in verschiedenen Bereichen anzuordnen, in denen die jeweiligen Sensoren gruppenweise befindlich sind. Die einzelnen Module sind dann innerhalb der Maschine durch äußere Leitungen verbunden. Die Kommunikation mit der externen Auswerteeinheit 10 erfolgt aber nach wie vor nur durch ein erstes Sensormodul, dem andere Module nachgeordnet sind.

## Patentansprüche

1. Einrichtung zur Meßwertübertragung, mit einem ersten Sensormodul (1) verbundene Sensoren, die Betriebszustände einer Maschine als Meßwerte erfassen, wobei
- das erste Sensormodul (1) die Meßwerte verarbeitet,
- das erste Sensormodul (1) mit einer Energieversorgung (3) verbunden ist,
- das erste Sensormodul (1) Anschlüsse (5-8) für verschiedene Sensorbauartenaufweist,
- das erste Sensormodul (1) Anschlüsse für eine Auswerteeinheit (10) hat, und
- das erste Sensormodul (1) und die Sensoren in einer Maschine integriert sind,
**dadurch gekennzeichnet,** daß
- das erste Sensormodul ein aus miniaturisierten Bauelementen bestehendes Sensormodul, innerhalb eines abschirmenden sowie druckfesten und flüssigkeitsdichten Gehäuses (13) ist,
- in der Maschine ein weiteres Sensormodul integriert ist,
- das weitere Sensormodul ebenso als ein aus miniaturisierten Bauelementen bestehendes Sensormodul innerhalb eines abschirmenden sowie druckfesten und flüssigkeitsdichten Gehäuses angeordnet ist,
- das erste Sensormodul (1) mit der externen Auswerteeinheit (10) durch ein Bussystem (9) verbunden ist,
- das zweite Sensormodul elektrisch verbunden mit dem ersten Sensormodul (1) für Spannungsversorgung und Datenübertragung ist, wobei
- die Kommunikation mit der externen Auswerteeinheit (10) nur durch das erste Sensormodul (1) erfolgt, dem das andere Modul nachgeordnet ist.

2. Einrichtung nach Anspruch 1, dadurch gekennzeichnet, daß das Sensormodul (1) mit einer Einheit zur Erzeugung einer stabilen Gleichspannung versehen ist.

3. Einrichtung nach Anspruch 1, dadurch gekennzeichnet, daß das Sensormodul (1) mit einer Einheit zur Energieversorgung aus dem Versorgungsstromkreis einer Maschine versehen ist.

4. Einrichtung nach einem der Ansprüche 1, 2 oder 3, dadurch gekennzeichnet, daß ein Sensormodul (1) einzelne Module zur Erfassung, und/oder Vorverarbeitung, Vereinheitlichung, Übertragung der von verschiedenen Sensorbauarten gelieferten Meßwerte aufweist.

5. Einrichtung nach einem oder mehreren der Ansprüche 1 bis 4, dadurch gekennzeichnet, daß das Sensormodul (1) durch eine ein- oder mehradrige Busanschaltung (9) mit einer externen Auswerteeinheit verbunden ist.

6. Einrichtung nach einem der Ansprüche 1 - 5, dadurch gekennzeichnet, daß die Datenübertragung zwischen erstem Sensormodul (1) und Auswertegerät (10) mit Hilfe der Verbindungsleitungen einer Spannungsversorgung erfolgt.

7. Einrichtung nach einem oder mehreren der Ansprüche 1 bis 6, dadurch gekennzeichnet, daß das erste Sensormodul (1) mit einem Modem für eine drahtlose Datenübertragung versehen ist.

8. Einrichtung nach einem oder mehreren der Ansprüche 1 bis 6, dadurch gekennzeichnet, daß das erste Sensormodul (1) mit der Auswerteeineinheit (10) durch ein Lichtleiterkabel als einadrige Busanschaltung verbunden ist.

9. Einrichtung nach einem oder mehreren der Ansprüche 1 bis 8, dadurch gekennzeichnet, daß ein im Sensormodul (1) angeordneter programmierbarer Mikrocontroller die Verarbeitung von Meßwerten, Testfunktionen und die Kommunikation der beteiligten Geräte steuert.

10. Einrichtung nach einem oder mehreren der Ansprüche 1 bis 9, dadurch gekennzeichnet, daß das Sensormodul (1) mit einer Einrichtung zur Erzeugung von Betriebs- und/oder Referenzspannungen der internen Elektronik und der anschließbaren Sensoren versehen ist.

11. Einrichtung nach einem oder mehreren der Ansprüche 1 bis 10, dadurch gekennzeichnet, daß ein rohrförmiges Stahlgehäuse (13) ein oder mehrere Sensormodule (1) abschirmt.

## Claims

1. Device for transmitting measured values, having sensors which are connected to a first sensor module (1) and detect the operating states of a machine as measured values,
- the first sensor module (1) processing the measured values,
- the first sensor module (1) being connected to a power supply (3),
- the first sensor module (1) having connections (5-8) for different designs of sensors,
- the first sensor module (1) having connections for an evaluation unit (10), and
- the first sensor module (1) and the sensors being integrated in a machine,
charaterized in that
- the first sensor module is a sensor module, comprising miniaturized components, inside a screening housing (13) which is also pressuretight and liquidtight,
- a further sensor module is integrated in the machine,
- the further sensor module is likewise arranged as a sensor module, comprising miniaturized components, inside a screening housing which is also pressuretight and liquidtight,
- the first sensor module (1) is connected to the external evaluation unit (10) via a bus system (9), and
- the second sensor module is electrically connected to the first sensor module (1) for voltage supply and data transmission,
- communication with the external evaluation unit (10) taking place only via the first sensor module (1), downstream of which the other module is arranged.

2. Device according to Claim 1, charaterized in that the sensor module (1) is provided with a unit for generating a stable DC voltage.

3. Device according to claim 1, characterized in that the sensor module (1) is provided with a unit for supplying power from the supply circuit of a machine.

4. Device according to one of Claims 1, 2 or 3, charaterized in that a sensor module (1) has individual modules for detecting, and/or preprocessing, standardizing and transmitting the measured values supplied by different designs of sensor.

5. Device according to one or more of Claims 1 to 4, charaterized in that the sensor module (1) is connected to an external evaluation unit by means of a single-core or multi-core bus interface connection (9).

6. Device according to one of Claims 1 - 5, charaterized in that data is transmitted between the first sensor module (1) and evaluation device (10) with the aid of the connecting lines of a voltage supply.

7. Device according to one or more of Claims 1 to 6, charaterized in that the first sensor module (1) is provided with a modem for wireless data transmission.

8. Device according to one or more of Claims 1 to 6, charaterized in that the first sensor module (1) is connected to the evaluation unit (10) by means of an optical conductor cable as single-core bus interface connection.

9. Device according to one or more of Claims 1 to 8, charaterized in that a programmable microcontroller arranged in the sensor module (1) controls the processing of measured values, test functions and the communication of the units involved.

10. Device according to one or more of Claims 1 to 9, charaterized in that the sensor module (1) is provided with a device for generating operating and/or reference voltages of the internal electronics and the sensors which can be connected.

11. Device according to one or more of Claims 1 to 10, charaterized in that a tubular steel housing (13) screens one or more sensor modules (1).

## Revendications

1. Dispositif pour transmettre une valeur mesurée comprenant des capteurs reliés à une première unité de capteur (1), lesquels détectent des états de fonctionnement d'une machine sous la forme de valeurs mesurées,
- la première unité de capteur (1) assurant le conditionnement des valeurs mesurées,
- la première unité de capteur (1) étant reliée à une source d'énergie (3),
- la première unité de capteur (1) présentant des bornes (5-8) pour différents types de capteurs,
- la première unité de capteur (1) étant munie de bornes pour une unité d'analyse (10), et
- la première unité de capteur (1) et les capteurs étant intégrés dans une machine,
caractérisé en ce que
- la première unité de capteur est une unité de capteur composée de composants miniaturisés à l'intérieur d'un boîtier (13) blindé, résistant à la pression et étanche,
- une unité de capteur supplémentaire est intégrée dans la machine,
- l'unité de capteur supplémentaire est elle aussi une unité de capteur composée de composants miniaturisés à l'intérieur d'un boîtier blindé, résistant à la pression et étanche,
- la première unité de capteur (1) est reliée à l'unité d'analyse externe (10) par le biais d'un système de bus (9),
- la deuxième unité de capteur est reliée électriquement à la première unité de capteur (1) pour l'alimentation électrique et la transmission des données,
- la communication avec l'unité d'analyse externe (10) n'ayant lieu qu'au travers de la première unité de capteur (1) à la suite de laquelle est branchée l'autre unité.

2. Dispositif selon la revendication 1, caractérisé en ce que l'unité de capteur (1) est munie d'une unité destinée à produire une tension continue stable.

3. Dispositif selon la revendication 1, caractérisé en ce que l'unité de capteur (1) est munie d'une unité d'alimentation en énergie à partir du circuit électrique d'alimentation d'une machine.

4. Dispositif selon l'une des revendications 1, 2 ou 3, caractérisé en ce qu'une unité de capteur (1) présente des unités individuelles pour détecter et/ou préconditionner, homogénéiser, transmettre les valeurs mesurées fournies par les différents types de capteurs.

5. Dispositif selon une ou plusieurs des revendications 1 à 4, caractérisé en ce que l'unité de capteur (1) est reliée à une unité d'analyse externe par le biais d'un circuit de bus (9) à un ou plusieurs fils.

6. Dispositif selon l'une des revendications 1 à 5, caractérisé en ce que la transmission des données entre la première unité de capteur (1) et l'analyseur (10) est réalisée à l'aide des câbles de raccordement d'une alimentation électrique.

7. Dispositif selon une ou plusieurs des revendications 1 à 6, caractérisé en ce que la première unité de capteur (1) est munie d'un modem pour une transmission des données sans fil.

8. Dispositif selon une ou plusieurs des revendications 1 à 6, caractérisé en ce que la première unité de capteur (1) est reliée à l'unité d'analyse (10) par le biais d'un câble à fibres optiques sous la forme d'un circuit de bus à un fil.

9. Dispositif selon une ou plusieurs des revendications 1 à 8, caractérisé en ce qu'un microcontrôleur programmable logé dans l'unité de capteur (1) commande le conditionnement des valeurs mesurées, les fonctions de test et la communication entre les appareils concernés.

10. Dispositif selon une ou plusieurs des revendications 1 à 9, caractérisé en ce que l'unité de capteur (1) est munie d'un dispositif pour produire les tensions de service et/ou de référence de l'électronique interne et des capteurs qui peuvent y être raccordés.

11. Dispositif selon une ou plusieurs des revendications 1 à 10, caractérisé en ce qu'un boîtier en acier tubulaire (13) blinde une ou plusieurs unités de capteur (1).
